# EUROPÄISCHE PATENTSCHRIFT

(11) **EP 3 624 981 B1**
(45) Veröffentlichungstag und Bekanntmachung des Hinweises auf die Patenterteilung: **30.06.2021**
(21) Anmeldenummer: 18727164.8
(22) Anmeldetag: 07.05.2018
(51) Int. Cl.: B23K 20/10, B23K 20/22, H01R 4/02, H01R 43/02, B23K 101/32, B23K 101/38

(54) **VORRICHTUNG ZUM VERSCHWEISSEN VON STABFÖRMIGEN ELEKTRISCHEN LEITERN**
DEVICE FOR WELDING BAR-SHAPED ELECTRICAL CONDUCTORS
DISPOSITIF DE SOUDAGE DE CONDUCTEURS ÉLECTRIQUES EN FORME DE BARRES

(30) Priorität: 15.05.2017 DE 102017208164
(43) Veröffentlichungstag der Anmeldung: 25.03.2020
(73) Patentinhaber: Schunk Sonosystems GmbH, 35435 Wettenberg (DE)
(72) Erfinder: STROBEL, Heiko, 35516 Muenzenberg (DE); RUEHL, Sebastian, 35083 Wetter (DE); FEY, Manuel, 35585 Blasbach (DE); KAEMMERER, Dennis Tobias, 35435 Wettenberg (DE)
(74) Vertreter: advotec.
(86) Internationale Anmeldenummer: PCT/EP2018/061735
(87) Internationale Veröffentlichungsnummer: WO 2018/210603

(56) Entgegenhaltungen:
- JP-A- 2014 179 435
- US-A1- 2004 020 580
- US-A1- 2006 169 388
- US-A1- 2015 288 123

## Beschreibung

Die vorliegende Erfindung betrifft eine Vorrichtung zum Verschweißen von stabförmigen elektrischen Leitern gemäß dem Oberbegriff des Anspruchs 1 (siehe z.B. US 2006/169388 A1).

Vorrichtungen der eingangs genannten Art weisen einen Verdichtungsraum auf, der zur Herstellung einer Ultraschallschweißverbindung zwischen Verbindungsbereichen von Leitern dient, wobei in der Praxis mit ein und derselben Vorrichtung elektrische Leiter miteinander verbunden werden, die im Durchmesser höchst unterschiedliche Verbindungsbereiche aufweisen können. Dabei erfolgt eine im Wesentlichen von den unterschiedlichen Durchmessern der Verbindungsbereiche einheitliche Handhabung der Leiter, derart, dass die Verbindungsbereiche in den geöffneten Verdichtungsraum eingelegt werden und sich nach dem Schließen des Verdichtungsraums ein Kontaktbereich zwischen der Arbeitsfläche der Sonotrode und zumindest dem unteren Verbindungsbereich von zwei in Stapelanordnung übereinander angeordneten Leitern in Abhängigkeit vom Durchmesser des Verbindungsbereichs ergibt.

Zur Übertragung der Ultraschallschwingungen von der Sonotrode auf die Verbindungsbereiche ist die Arbeitsfläche mit einer profilierten Oberflächengestaltung versehen, derart, dass Profilerhebungen sich quer zur Längsachse der Sonotrode auf der Arbeitsfläche erstrecken. Insbesondere bei im Durchmesser sehr klein bemessenen Verbindungsbereichen der Leiter hat es sich herausgestellt, dass es durch die Profilerhebungen zu einer übermäßigen mechanischen Beanspruchung der Verbindungsbereiche kommen kann, die sich bei der fertiggestellten Schweißverbindung dadurch bemerkbar macht, dass die optimal möglichen Verbindungsfestigkeiten nicht erreicht werden.

Die US 2006/169388 A1 zeigt eine Sonotrode, die mit einem entsprechend ausgebildeten Amboss gepaart zur Verbindung von Flächen oder plattenförmigen Materialien dient, wobei eine uneinheitlich ausgebildete Arbeitsfläche der Sonotrode, welche eine zu einem Randbereich der Arbeitsfläche reduzierte Profilierung aufweist, dazu dient, die Beanspruchung der miteinander zu verbindenden Materialien in deren Randbereichen zu reduzieren.

Die US 2015/288123 A1 betrifft eine Ultraschallschweißvorrichtung mit einem Verdichtungsraum und einer den Verdichtungsraum in einer Achsenrichtung begrenzenden Sonotrode. Die Sonotrode weist eine Arbeitsfläche auf, die in einem mittleren Bereich eine zumindest uneinheitlich ausgebildete Oberflächenstruktur aufweist, welche eine von einer durch die übrige Arbeitsfläche gebildeten Kontaktzone abweichende Oberflächengestaltung aufweist.

Die JP 2014 179435 A offenbart eine Sonotrode, durch die ein abgewinkeltes Ende eines flachen Kontaktleiters mit einer Anschlussfläche verbindbar ist, wobei durch eine zum abgewinkelten Ende hin abnehmend ausgebildete Profilierung einer Arbeitsfläche der Sonotrode eine reduzierte mechanische Beanspruchung des Leiters ermöglicht werden soll.

Die US 2004/020580 A1 beschreibt eine Sonotrode, die eine Verbindung eines Flachkabels mit einer Sammelschiene ermöglicht.

Der vorliegenden Erfindung liegt daher die Aufgabe zugrunde, eine Vorrichtung zum Verschweißen von stabförmigen elektrischen Leitern vorzuschlagen, die eine effektive Reduzierung der Kerbwirkung bei der Beaufschlagung eines Drahtleiters mit Ultraschallschwingungen in einem Verdichtungsraum ermöglicht.

Zur Lösung dieser Aufgabe weist die erfindungsgemäße Vorrichtung die Merkmale des Anspruchs 1 auf.

Bei der erfindungsgemäßen Vorrichtung ist die Sonderkontaktzone benachbart dem Begrenzungselement angeordnet, derart, dass die Sonderkontaktzone an einer zum Begrenzungselement parallelen Arbeitsflächenkante ausgebildet ist.

Die erfindungsgemäße Vorrichtung ermöglicht sowohl die Herstellung von Ultraschallschweißverbindungen zwischen elektrischen Leitern mit mittleren und großen Drahtdurchmessern als auch mit kleinen und kleinsten Drahtdurchmessern mit ein und derselben Vorrichtung beziehungsweise ein und derselben Sonotrode.

Erfindungsgemäß erfolgt durch eine differenzierte Gestaltung der Arbeitsfläche beziehungsweise einer Aufteilung der Arbeitsfläche in eine Kontaktzone, die für die Kontaktierung mit mittleren und großen Drahtdurchmessers bestimmt ist und eine Sonderkontaktzone, die für die Kontaktierung mit kleinen und kleinsten Drahtdurchmessern bestimmt ist, eine optimale Ultraschallbeaufschlagung unterschiedlicher Drahtdurchmesser mit ein und derselben Vorrichtung beziehungsweise ein und derselben Sonotrode.

Hierdurch ist es möglich, dass die Sonderkontaktzone bei kleinen Schweißverbindern komplett wirksam ist und Beschädigungen der Drähte beziehungsweise Adern der Leiter durch die Profilerhebungen vermieden werden können, wohingegen Leiter mit im Durchmesser größeren Drähten im Wesentlichen Kontakt mit dem "normalen" Profil in der Kontaktzone der Arbeitsfläche haben, so dass hier größere Kräfte übertragen werden können.

Kleinste und kleine Leiterquerschnitte können somit mit einem "entschärften" Profil der Arbeitsfläche in der Sonderkontaktzone und mittlere und große Leiterquerschnitte mit dem "scharfen" Profil in der Kontaktzone beaufschlagt werden, um unabhängig vom Leiterquerschnitt gleichermaßen optimale Verbindungsfestigkeiten zu ermöglichen.

Erfindungsgemäß ist die Sonderkontaktzone benachbart dem Begrenzungselement angeordnet, sodass sich bei einem geschlossenen Verdichtungsraum, bei dem das Schieberelement in y-Achsenrichtung so weit gegen die Begrenzungsfläche des Begrenzungselements verschoben ist, wie es die zwischenliegend angeordneten Verbindungsbereiche der Leiter zulassen, die gewünschte Anordnung der Verbindungsbereiche in der Sonderkontaktzone einstellt.

Dies ist insbesondere dann der Fall, wenn die Sonderkontaktzone erfindungsgemäß an einer zum Begrenzungselement parallelen Arbeitsflächenkante der Arbeitsfläche der Sonotrode ausgebildet ist.

Erfindungsgemäß weist die Kontaktzone eine Oberflächengestaltung mit in der dritten Achsenrichtung verlaufenden Profilerhebungen auf, die zumindest teilweise im Bereich der Sonderkontaktzone einen vom Profilquerschnitt in der Kontaktzone abweichenden Sonderprofilquerschnitt aufweisen.

Eine besonders einfache Realisierung der Sonderkontaktzone ist möglich, da der Sonderprofilquerschnitt erfindungsgemäß eine gegenüber dem Profilquerschnitt reduzierte Profilhöhe aufweist.

Vorzugsweise ist die reduzierte Profilhöhe durch eine Abflachung oder Abrundung einer Profilspitze des Profilquerschnitts gebildet, sodass insbesondere im Fall der Abflachung die Sonderkontaktzone durch partiellen Materialabtrag nachfolgend der Herstellung der Arbeitsfläche der Sonotrode die Ausbildung der Sonderkontaktzone erfolgen kann.

Vorzugsweise weist die Sonderkontaktzone zumindest in einem sich in der ersten Achsenrichtung erstreckenden mittleren Bereich einen zu einer parallel zur dritten Achsenrichtung verlaufenden Symmetrieachse symmetrischen Sonderkontaktabschnitt auf, wobei in einer besonders einfach herstellbaren Ausführung die Sonderkontaktzone über ihre gesamte Lange symmetrisch ausgebildet ist.

Eine symmetrisch in der Arbeitsfläche angeordnete Kontaktzone wird möglich, wenn die Symmetrieachse durch eine parallel zur dritten Achsenrichtung verlaufende Mittelachse der Arbeitsfläche gebildet ist, wobei sich eine derartige Ausführungsform besonders vorteilhaft zur Herstellung einer Durchgangsverbindung zwischen zwei Leitern eignet, bei der sich die miteinander zu verbindenden Verbindungsbereiche der Leiter in überlappender Anordnung über die Mittelachse hinweg in entgegengesetzte Richtungen erstrecken.

In Versuchen hat sich herausgestellt, dass es sich besonders positiv auf die erzielbare Verbindungsqualität, insbesondere der einander überlappend angeordneten, sich in entgegengesetzte Richtungen erstreckenden Leitern, auswirkt, wenn zumindest eine im Bereich der Symmetrieachse ausgebildete Profilerhebung sich über die gesamte Breite der Arbeitsfläche erstreckt und dabei vorzugsweise konstant ausgebildet ist, also etwa durch die konstant ausgebildete Profilerhebung in Längsrichtung der Sonotrode beziehungsweise in Richtung der x-Achse eine Unterteilung der Sonderkontaktzone in zwei Teilzonen erfolgt.

Besonders vorteilhaft ist es auch, wenn sich die Sonderkontaktzone nur über eine Teillänge der Kontaktzone in der ersten Achsenrichtung erstreckt.

Wenn die Sonderkontaktzone asymmetrisch zu einer parallel zur dritten Achsenrichtung verlaufenden Mittelachse der Arbeitsfläche angeordnet ist, ergibt sich eine besondere Eignung der Vorrichtung zur Herstellung einer Verbindung zwischen einander überlappend angeordneten Verbindungsbereichen zweier Leiter, die sich in überstimmender Richtung erstrecken.

Wenn darüber hinaus die Sonderkontaktzone zu einem Arbeitsflächenende hin verlagert angeordnet ist, kann die Ausgestaltung eines Teilbereichs der Kontaktzone zur Ausbildung der Sonderkontaktzone auf einen kleinen, außenliegenden Arbeitsflächenbereich beschränkt werden, wodurch gleichzeitig eine "Einlegeseite" der Sonotrodenarbeitsfläche definiert werden kann, also die Seite der Sonotrodenarbeitsfläche, auf der das Einlegen der miteinander zu verbindenden Verbindungsbereiche der Leiter in den Verdichtungsraum erfolgt.

Vorzugsweise weist die Sonderkontaktzone eine Breite in der dritten Achsenrichtung auf, die kleiner als 2 mm ist.

Besonders bevorzugt ist es, wenn die Sonderkontaktzone eine Breite in der dritten Achsenrichtung aufweist, die kleiner als 1,5 mm ist. In besonderen Fällen, also insbesondere dann, wenn besonders kleine Drahtdurchmesser miteinander zu verbinden sind, hat es sich als vorteilhaft herausgestellt, wenn die Sonderkontaktzone eine Breite in der dritten Achsenrichtung aufweist, die kleiner als 1 mm ist.

Zur Lösung der der Erfindung zugrunde liegenden Aufgabe kann die Sonotrode eine Arbeitsfläche aufweisen, die in einer als Teilbereich der Arbeitsfläche ausgebildeten Sonderkontaktzone, die zur Beaufschlagung von zumindest einem Verbindungsbereich eines elektrischen Leiters mit Ultraschallschwingungen dienen kann, eine von einer durch die übrige Arbeitsfläche gebildeten Kontaktzone abweichende Oberflächengestaltung aufweist.

Vorzugsweise erstreckt sich die Sonderkontaktzone in Richtung einer Längsachse der Sonotrode.

Besonders bevorzugt ist es, wenn die Sonderkontaktzone an einer Arbeitsflächenkante der Sonotrode ausgebildet ist.

Wenn die Kontaktzone eine Oberflächengestaltung mit quer zur Längsrichtung der Sonotrode verlaufenden Profilerhebungen aufweist, die im Bereich der Sonderkontaktzone einen vom Profilquerschnitt in der Kontaktzone abweichenden Sonderprofilquerschnitt aufweisen, kann die Ausgestaltung der Sonderkontaktzone in besonders einfacher Art und Weise erfolgen.

Besonders bevorzugt ist es, wenn der Sonderprofilquerschnitt eine gegenüber dem Profilquerschnitt reduzierte Profilhöhe aufweist.

Weiterhin ist es bevorzugt, wenn die reduzierte Profilhöhe durch eine Abflachung oder Abrundung einer Profilspitze des Profilquerschnitts gebildet ist.

Vorzugsweise weist die Sonderkontaktzone zumindest in einem sich in Richtung der Längsachse erstreckenden mittleren Bereich einen zu einer parallel zu einer Querachse verlaufenden Symmetrieachse symmetrischen Sonderkontaktabschnitt auf.

In einer besonders bevorzugten Ausführungsform ist die Sonderkontaktzone über ihre gesamte Länge symmetrisch ausgebildet.

Wenn die Symmetrieachse durch eine parallel zur Querachse verlaufende Mittelachse der Arbeitsfläche gebildet ist, ist die Sonotrode in besonderer Weise geeignet zur Herstellung einer Verbindung zwischen Verbindungsbereichen von Leitern, die sich in entgegengesetzte Richtungen erstrecken.

Vorzugsweise erstreckt sich zumindest eine im Bereich der Symmetrieachse ausgebildete Profilerhebung über die Breite der Arbeitsfläche, wobei die Profilerhebung besonders vorzugsweise konstant ist.

Wenn die Sonderkontaktzone sich nur über eine Teillänge der Kontaktzone in Richtung der Längsachse erstreckt, kann eine Ausbildung der Sonderkontaktzone auf den sich tatsächlich bei der überlappenden Anordnung der Verbindungsbereiche ergebenden Überdeckungsbereich der Leiter beschränkt werden.

Insbesondere zur Herstellung einer Verbindung zwischen Verbindungsbereichen von zwei Leitern, die sich in übereinstimmender Richtung erstrecken, ist es vorteilhaft, wenn die Sonderkontaktzone asymmetrisch zu einer parallel zur Querachse verlaufenden Mittelachse der Arbeitsfläche angeordnet ist.

Vorzugsweise ist dabei die Sonderkontaktzone zu einem Arbeitsflächenende hin verlagert angeordnet.

In einer bevorzugten Ausführungsform der Sonotrode weist die Sonderkontaktzone eine Breite in Richtung der Querachse auf, die kleiner als 2 mm ist.

Besonders vorteilhaft ist es, wenn die Sonderkontaktzone eine Breite in Richtung der Querachse aufweist, die kleiner als 1,5 mm ist, wobei es darüber hinaus bei im Durchmesser besonders geringen Leitern von Vorteil ist, wenn die Sonderkontaktzone eine Breite in Richtung der Querachse aufweist, die kleiner als 1 mm ist.

Nachfolgend werden bevorzugte Ausführungsformen der Vorrichtung sowie der Sonotrode anhand der Zeichnung näher erläutert.

Es zeigen:
- **Fig. 1**: einen geöffneten Verdichtungsraum einer Ultraschall-schweißvorrichtung in einer Vorderansicht mit zwei in einer Stapelanordnung übereinander angeordneten Verbindungsbe-reichen von miteinander zu verschweißenden Leitern;
- **Fig. 2**: den in **Fig. 1** dargestellten Verdichtungsraum in geschlosse-ner Konfiguration;
- **Fig. 3**: eine Sonotrode in isometrischer Darstellung mit zwei zur Herstellung eines Durchgangsknotens in einer Sonderkon-taktzone angeordneten Verbindungsbereichen;
- **Fig. 4**: eine Sonotrode in isometrischer Darstellung mit zwei zur Herstellung eines Endknotens in einer Sonderkontaktzone angeordneten Verbindungsbereichen;
- **Fig. 5**: eine Arbeitsfläche der in **Fig. 3** dargestellten Sonotrode in vergrößerter Darstellung mit einer an einer Arbeitsflächen-kante ausgebildeten Sonderkontaktzone in einer ersten Aus-führungsform;
- **Fig. 6**: eine Arbeitsfläche der in **Fig. 3** dargestellten Sonotrode in vergrößerter Darstellung mit einer an einer Arbeitsflächen-kante ausgebildeten Sonderkontaktzone in einer zweiten Ausführungsform;
- **Fig. 7**: eine Arbeitsfläche der in **Fig. 3** dargestellten Sonotrode in vergrößerter Darstellung mit einer an einer Arbeitsflächen-kante ausgebildeten Sonderkontaktzone in einer dritten Aus-führungsform;
- **Fig. 8**: eine schematische Darstellung der Anordnung der in **Fig. 6** dargestellten Verbindungsbereiche auf der Sonderkontaktzo-ne in einer Schnittdarstellung gemäß Schnittlinienverlauf VIII - VIII in **Fig. 4****.**

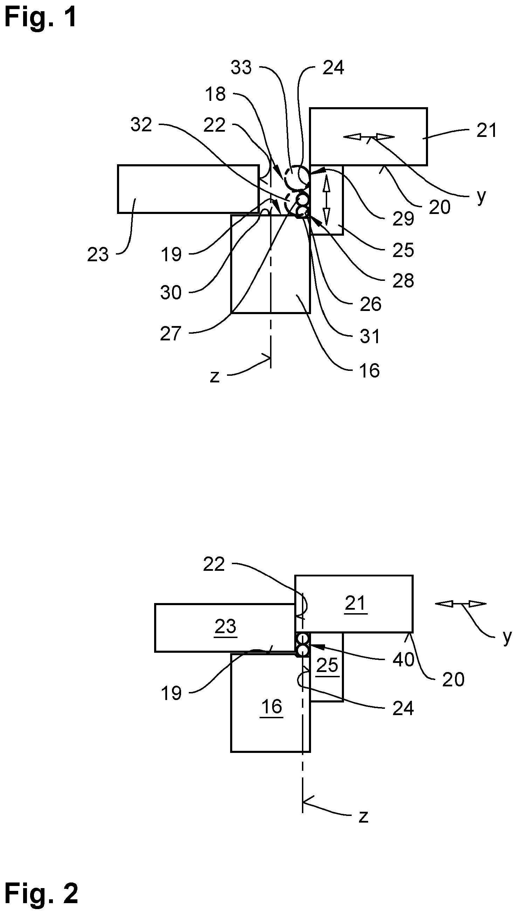

Die **Fig. 1** und **2** zeigen die wesentlichen Elemente eines im Querschnitt verstellbaren, also in Höhe und Breite verstellbaren Verdichtungsraums 18, der zur Aufnahme von Verbindungsbereichen 26, 27 von sich in einer ersten Achsenrichtung (x-Achse) erstreckenden Leitern 28, 29 dient. Der Verdichtungsraum 18 ist in einer zweiten Achsenrichtung (z-Achse) an zwei einander gegenüberliegenden Seiten durch eine Arbeitsfläche 19 einer Ultraschallschwingungen übertragenden Sonotrode 16 und eine Gegenfläche 20 eines in einer dritten Achsenrichtung (y-Achse) verfahrbaren Ambosses 21 begrenzt. In der dritten Achsenrichtung ist der Verdichtungsraum 18 an zwei einander gegenüberliegenden Seiten durch eine Begrenzungsfläche 22 eines in Richtung der y-Achse verfahrbaren Schieberelements 23 und eine Begrenzungsfläche 24 eines ebenso wie der Amboss 21 in Richtung der z-Achse verfahrbaren Begrenzungselements 25 begrenzt.

Bei dem in **Fig. 1** dargestellten Ausführungsbeispiel des Verdichtungsraums 18 befinden sich zwei in Stapelanordnung übereinander liegend angeordnete Verbindungsbereiche 26, 27 von miteinander mittels der Sonotrode 16 zu verbindenden Leitern 28, 29 auf der Arbeitsfläche 19 der Sonotrode 16, wobei **Fig. 1** die Verbindungsbereiche 26, 27 unmittelbar nach dem Einlegen in den geöffneten Verdichtungsraum 18 zeigt.

**Fig. 2** zeigt den Verdichtungsraum 18 in der geschlossenen Konfiguration, in der die den Verdichtungsraum 18 begrenzenden Komponenten, also die Sonotrode 16, der Amboss 21, das Schieberelement 23 und das Begrenzungselement 25, so gegeneinander verfahren sind, dass der nunmehr in seinem Volumen reduzierte Verdichtungsraum 18 eine Form 40 ausbildet, die bei einer Beaufschlagung der Verbindungsbereiche 26, 27 der Leiter 28, 29 mit mechanischen Schwingungen der Sonotrode 16 in einem Reibschweißvorgang eine Komprimierung und Verbindung der Verbindungsbereiche 26, 27 miteinander zur Ausbildung eines Schweißknotens ermöglicht.

Wie aus den **Fig. 1** und **2** ersichtlich, weist die Arbeitsfläche 19 eine Kontaktzone 30 und eine Sonderkontaktzone 31 auf, wobei im vorliegenden Fall die Verbindungsbereiche 26, 27 der Leiter 28, 29 einen derart geringen Querschnitt aufweisen, dass der Verbindungsbereich 26 des unteren Leiters 28 ausschließlich in der Sonderkontaktzone 31 der Arbeitsfläche 19 aufliegt. Nach Überführung des Verdichtungsraums in seine in **Fig. 2** dargestellte geschlossene Konfiguration und Aktivierung der Sonotrode 16 zur Ausführung von Ultraschallschwingungen erfolgt demnach eine Übertragung der Ultraschallschwingungen auf den Verbindungsbereich 26 lediglich im Bereich der Sonderkontaktzone 31.

Wie durch die strichpunktierte Darstellung von Verbindungsbereichen 32, 33, die einen im Vergleich mit den Verbindungsbereichen 26, 27 wesentlich größeren Querschnitt aufweisen, verdeutlicht, würden derartig groß im Querschnitt ausgebildete Verbindungsbereiche 32, 33 größtenteils auf der Kontaktzone 30 der Arbeitsfläche 19 aufliegen und nur mit einem relativ kleinen Anteil in der Sonderkontaktzone 31.

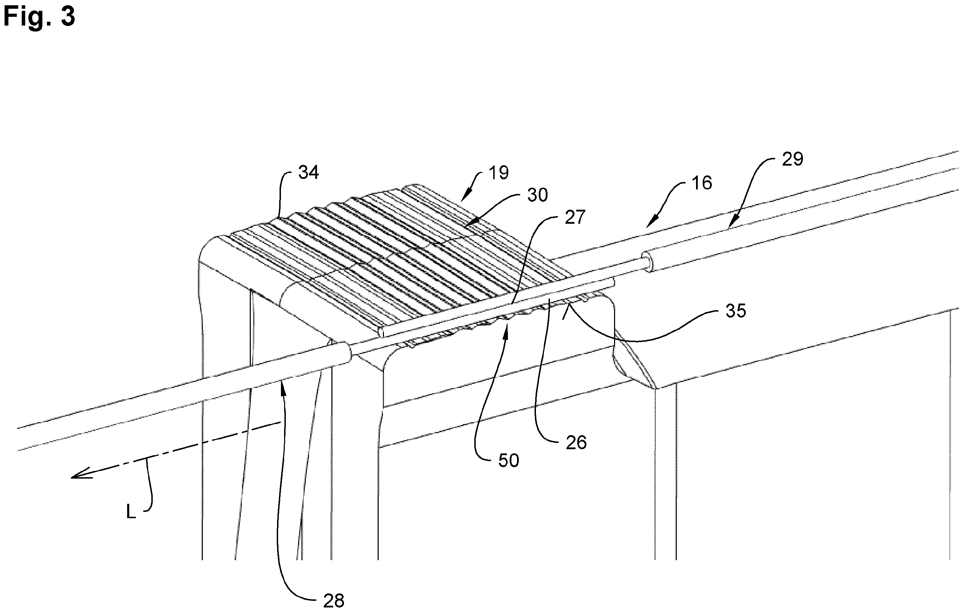

Wie aus den Darstellungen in den **Fig. 3** bis 7 ersichtlich, weist die Arbeitsfläche 19 eine profilierte Oberflächengestaltung auf mit Profilerhebungen 34, die sich quer zur Längsachse L der Sonotrode 16 über die Arbeitsfläche 19 erstrecken. In längs einer Arbeitsflächenkante 35 ausgebildeten Sonderkontaktzonen 31, 50, 51, 52 sind die Profilerhebungen 34 zumindest teilweise mit einem Sonderprofilquerschnitt 36 versehen, der abweichend von einem Profilquerschnitt 37 der Profilerhebungen 34 im Bereich der Kontaktzone 30 ausgebildet ist.

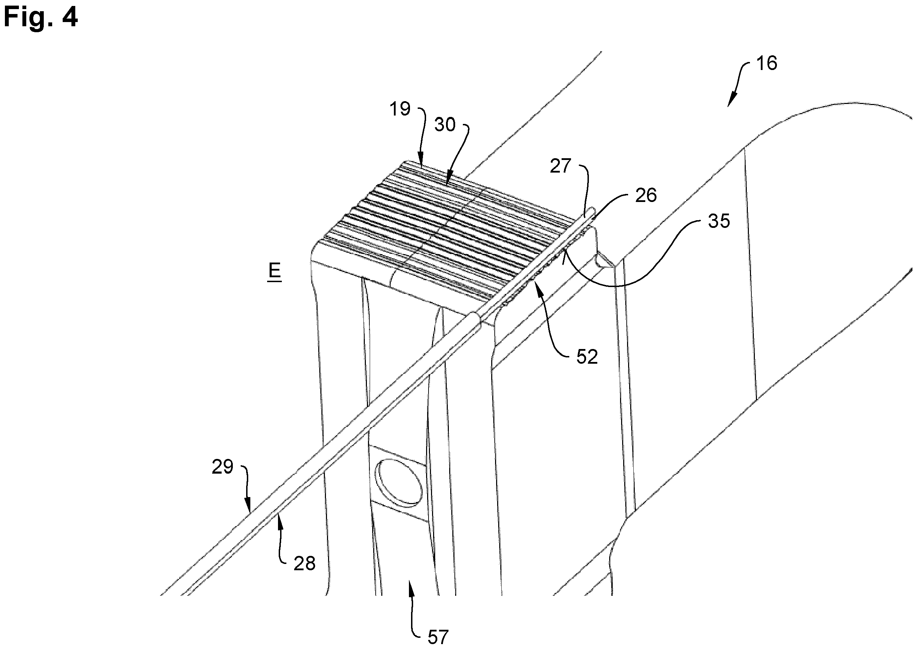

Im Fall der in den **Fig. 3** bis 7 dargestellten Ausführungsbeispiele weist der Sonderprofilquerschnitt 36 eine gegenüber dem Profilquerschnitt 37 reduzierte Profilhöhe auf, die durch eine Abflachung 38 einer am Profilquerschnitt 37 im Bereich der Kontaktzone 30 ausgebildeten Profilspitze 39 gebildet ist. Durch die Abflachungen 38 ist demnach in der Sonderkontaktzone 31 ein "entschärftes" Profil ausgebildet, sodass der entsprechend den **Fig. 3** und **4** untere Verbindungsbereich 26 bei einer Schwingungsbeaufschlagung durch die Sonotrode 16 in Längsrichtung der Sonotrode 16 vergleichsweise weniger stark mechanisch beansprucht wird, als dies bei einer Beaufschlagung des Verbindungsbereichs 26 mit dem "schärferen" Profilquerschnitt 37 der Profilerhebungen 34 in der Kontaktzone 30 der Fall wäre.

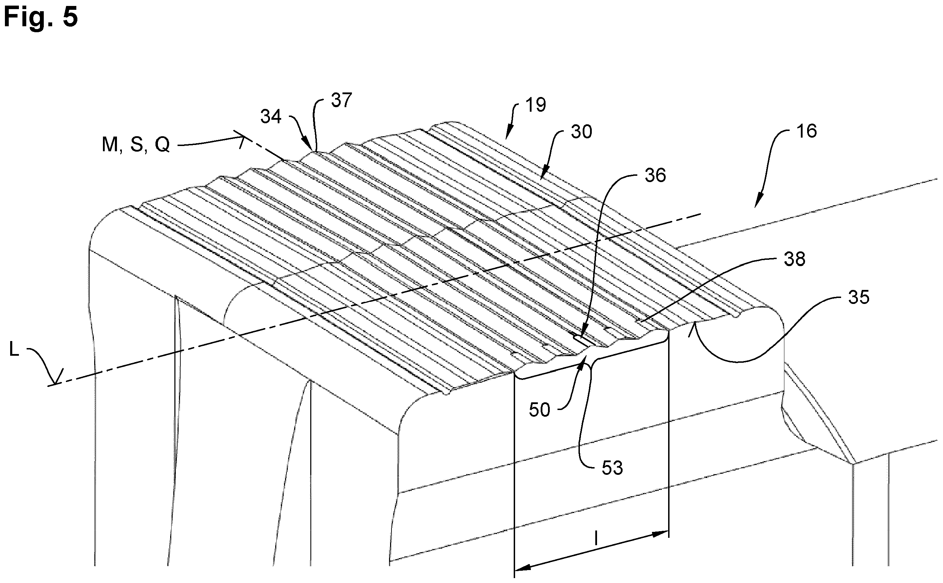

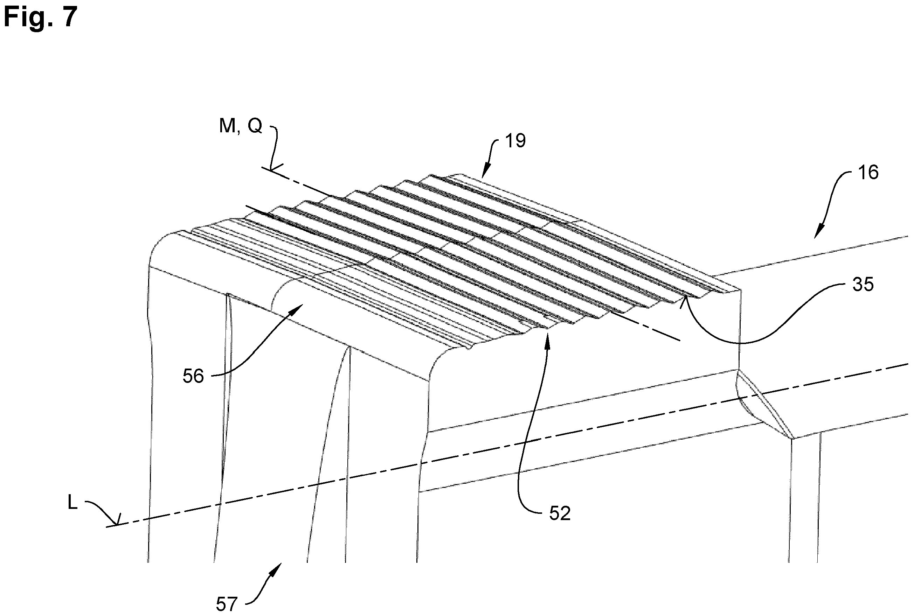

**Fig. 3** zeigt die Anordnung der Leiter 28, 29 zur Herstellung eines Durchgangsknotens, wobei die Sonotrode 16 auf der Arbeitsfläche 19 mit einer in **Fig. 5** vergrößert dargestellten Sonderkontaktzone 50 versehen ist. **Fig. 4** zeigt die Anordnung der Leiter 28, 29 zur Herstellung eines Endknotens, wobei die Sonotrode 16 auf der Arbeitsfläche 19 mit einer in **Fig. 7** vergrößert dargestellten Sonderkontaktzone 52 versehen ist.

**Fig. 5** zeigt die Ausbildung der Sonderkontaktzone 50 mit einem Sonderkontaktabschnitt 53, der sich in Richtung der Längsachse L erstreckt und der symmetrisch zu einer Symmetrieachse S ausgebildet ist, die parallel zu einer Querachse Q angeordnet ist, welche im vorliegenden Fall unter einem rechten Winkel zur Längsachse L angeordnet ist. Da im vorliegenden Fall die Symmetrieachse S mit der Mittelachse M der Arbeitsfläche 19 übereinstimmt, ist die Sonderkontaktzone 50 somit über ihre gesamte Länge symmetrisch ausgebildet.

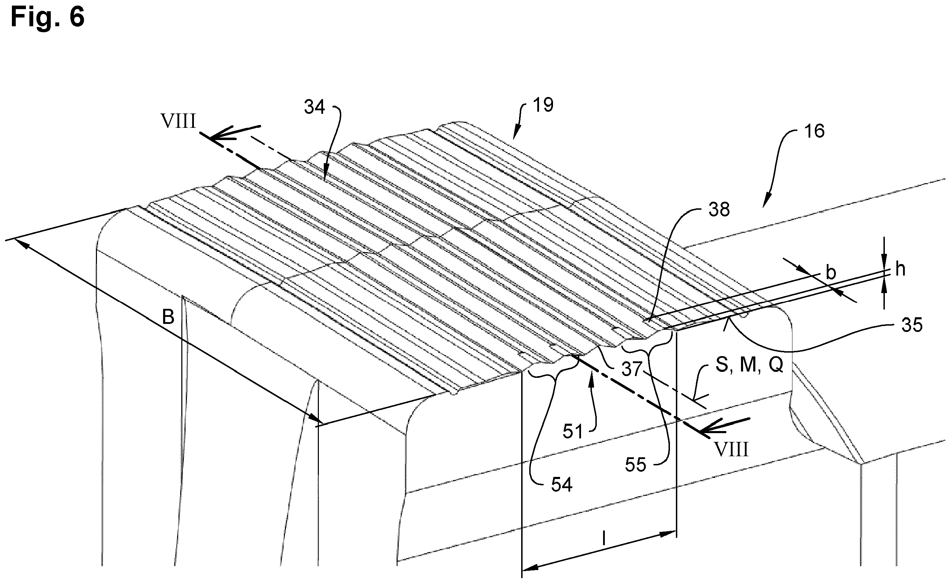

Im Unterschied zu der in **Fig. 5** dargestellten Sonderkontaktzone 50 weist die in **Fig. 6** dargestellte Sonderkontaktzone 51 im Bereich der Symmetrieachse S, die auch im vorliegenden Fall wieder mit der Mittelachse M der Arbeitsfläche 19 übereinstimmt, eine längs der Symmetrieachse S ausgebildete Profilerhebung 34 auf, die mit dem konstanten Profilquerschnitt 37 über gesamte Breite B der Arbeitsfläche 19 ausgebildet ist. Hierdurch ergeben sich zwei durch mittlere Profilerhebung 34 voneinander getrennt ausgebildete Sonderkontaktabschnitte 54, 55, wobei sich herausgestellt hat, dass durch einen somit durch die durchgehend ausgebildete Profilerhebung 34 gebildeten "Mittenzahn" bei einer Anordnung der miteinander zu verbindenden Verbindungsbereiche 26, 27 der Leiter 28, 29 gemäß **Fig. 3** eine besonders hohe "Schälfestigkeit" des Durchgangsknotens erreichbar ist.

**Fig. 7** zeigt die insbesondere zur Ausbildung eines Endknotens geeignete Ausgestaltung einer Sonderkontaktzone 52, wobei zur Ausbildung des Endknotens die in **Fig. 4** dargestellte Relativanordnung der Verbindungsbereiche 26, 27 auf der Arbeitsfläche 19 in der Sonderkontaktzone 52 vorgesehen ist.

Wie **Fig. 7** zeigt, ist die Sonderkontaktzone 52 asymmetrisch zu der parallel zu der im vorliegenden Fall unter einem rechten Winkel zur Längsachse verlaufenden Querachse Q sich erstreckenden Mittelachse M der Arbeitsfläche 19 angeordnet. Dabei ist die Sonderkontaktzone 52 zu einem Arbeitsflächenende 56 hin verlagert, das im vorliegenden Fall an einem freien Sonotrodenende 57 angeordnet ist. Wie insbesondere aus **Fig. 4** ersichtlich, ist somit eine Einlegeseite E definiert, derart, dass es sich bei der in **Fig. 7** dargestellten Ausbildung beziehungsweise Anordnung der Sonderkontaktzone 52 in der Arbeitsfläche 19 anbietet, die miteinander zur Ausbildung eines Endknotens zu verbindenden Verbindungsbereiche 26, 27 bezogen auf die Abbildung der Sonotrode 16 in **Fig. 4** von links nach rechts der Arbeitsfläche 19 der Sonotrode 16 zuzuführen beziehungsweise in den in den **Fig. 1** und **2** dargestellten Verdichtungsraum 18 einzuführen.

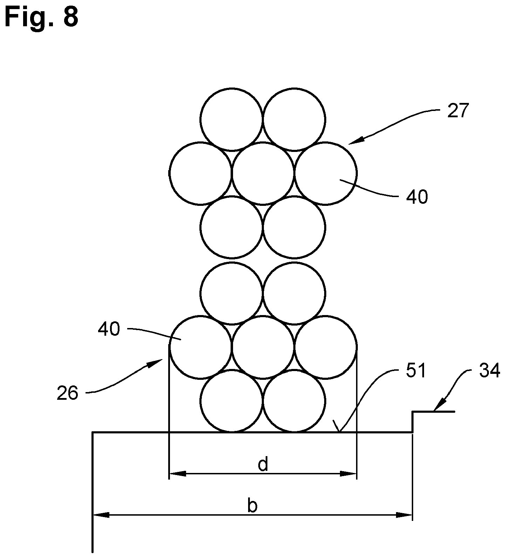

**Fig. 8** verdeutlicht die Anordnung des unteren Verbindungsbereichs 26 auf der in **Fig. 6** dargestellten Sonderkontaktzone 51, wobei deutlich wird, dass eine Breite b der Sonderkontaktzone 51 in einer Richtung quer zur Längsachse L der Sonotrode 16 bzw. in Längsrichtung der Profilerhebungen 34 entsprechend dem Durchmesser d des im vorliegenden Fall aus sieben einzelnen Drähten 40 oder Adern gebildeten Verbindungsbereichs 26 ausgebildet ist. Bei dem dargestellten Ausführungsbeispiel beträgt der Durchmesser der einzelnen Drähte 40 etwa 0,158 mm, sodass der Durchmesser des Verbindungsbereichs 26 etwa 0,5 mm beträgt.

Die Breite b der Sonderkontaktzone 51 ist vorliegend geringfügig breiter gewählt als der Durchmesser des Verbindungsbereichs 26, sodass sichergestellt ist, dass der Verbindungsbereich 26 ausschließlich im Bereich der Sonderkontaktzone 51 Kontakt mit der Arbeitsfläche 19 der Sonotrode 16 hat.

## Patentansprüche

1. Vorrichtung zum Verschweißen von stabförmigen elektrischen Leitern (28, 29), umfassend einen Verdichtungsraum (18) zur Aufnahme von zwei sich in einer ersten Achsenrichtung (X-Achse) erstreckenden und miteinander zu verbindenden Verbindungsbereichen (26, 27) der Leiter (28, 29), wobei der Verdichtungsraum (18) in einer zweiten Achsenrichtung (Z-Achse) an zwei einander gegenüberliegenden Seiten durch eine Arbeitsfläche (19) einer Ultraschallschwingungen übertragenden Sonotrode (16) und einer Gegenfläche (20) eines Ambosses (21) sowie in einer dritten Achsenrichtung (Y-Achse) an zwei einander gegenüberliegenden Seiten durch eine Begrenzungsfläche (22) eines in die dritte Achsenrichtung (Y-Achse) verfahrbaren Schieberelements (23) und eine Begrenzungsfläche (24) eines Begrenzungselements (25) begrenzt ist,
wobei die Arbeitsfläche (19) der Sonotrode (16) in einer als Teilbereich der Arbeitsfläche (19) ausgebildeten Sonderkontaktzone (31, 50, 51, 52), die zur Beaufschlagung von zumindest einem Verbindungsbereich (26, 27) mit Ultraschallschwingungen dient, eine von einer durch die übrige Arbeitsfläche (19) gebildeten Kontaktzone (30) abweichende Oberflächengestaltung aufweist, wobei die Kontaktzone (30) eine Oberflächengestaltung mit in der dritten Achsenrichtung (Y-Achse) verlaufenden Profilerhebungen (34) aufweist, die zumindest teilweise im Bereich der Sonderkontaktzone (31, 50, 51, 52) einen vom Profilquerschnitt (37) in der Kontaktzone (30) abweichenden Sonderprofilquerschnitt (36) aufweisen, derart, dass der Sonderprofilquerschnitt (36) eine gegenüber dem Profilquerschnitt (37) reduzierte Profilhöhe h aufweist
**dadurch gekennzeichnet,**
**dass** die Sonderkontaktzone benachbart dem Begrenzungselement angeordnet ist, derart, dass die Sonderkontaktzone an einer zum Begrenzungselement parallelen Arbeitsflächenkante (35) der Sonotrode (16) ausgebildet ist.

2. Vorrichtung nach Anspruch 1,
**dadurch gekennzeichnet,**
**dass** die reduzierte Profilhöhe h durch eine Abflachung (38) oder Abrundung einer Profilspitze (39) des Profilquerschnitts (37) gebildet ist.

3. Vorrichtung nach Anspruch 1 oder 2,
**dadurch gekennzeichnet,**
**dass** die Sonderkontaktzone (50, 51) zumindest in einem sich in der ersten Achsenrichtung (x-Achse) erstreckenden mittleren Bereich einen zu einer parallel zur dritten Achsenrichtung (y-Achse) verlaufenden Symmetrieachse S symmetrischen Sonderkontaktabschnitt (53, 54, 55) aufweist.

4. Vorrichtung nach Anspruch 3,
**dadurch gekennzeichnet,**
**dass** die Sonderkontaktzone (50, 51) über ihre gesamte Länge symmetrisch ausgebildet ist.

5. Vorrichtung nach Anspruch 3 oder 4,
**dadurch gekennzeichnet,**
**dass** die Symmetrieachse S durch eine parallel zur dritten Achsenrichtung (y-Achse) verlaufende Mittelachse M der Arbeitsfläche gebildet ist.

6. Vorrichtung nach einem der Ansprüche 3 bis 5,
**dadurch gekennzeichnet,**
**dass** die Sonderkontaktzone (51) diskontinuierlich ausgebildet ist.

7. Vorrichtung nach Anspruch 6,
**dadurch gekennzeichnet,**
**dass** sich zumindest eine im Bereich der Symmetrieachse S ausgebildete Profilerhebung (34) über die gesamte Breite B der Arbeitsfläche (19) erstreckt.

8. Vorrichtung nach einem der vorangehenden Ansprüche,
**dadurch gekennzeichnet,**
**dass** die Sonderkontaktzone (31, 50, 51, 52) sich nur über eine Teillänge der Kontaktzone (30) in der ersten Achsenrichtung (x-Achse) erstreckt.

9. Vorrichtung nach Anspruch 8,
**dadurch gekennzeichnet,**
**dass** die Sonderkontaktzone (52) asymmetrisch zu einer parallel zur dritten Achsenrichtung (y-Achse) verlaufenden Mittelachse M der Arbeitsfläche (19) angeordnet ist.

10. Vorrichtung nach Anspruch 9,
**dadurch gekennzeichnet,**
**dass** die Sonderkontaktzone (52) zu einem Arbeitsflächenende (56) hin verlagert angeordnet ist.

11. Vorrichtung nach einem der vorangehenden Ansprüche,
**dadurch gekennzeichnet,**
**dass** die Sonderkontaktzone (31, 50, 51, 52) eine Breite in der dritten Achsenrichtung (Y-Achse) aufweist, die kleiner als 2 mm ist.

12. Vorrichtung nach Anspruch 11,
**dadurch gekennzeichnet,**
**dass** die Sonderkontaktzone (31, 50, 51, 52) eine Breite in der dritten Achsenrichtung (Y-Achse) aufweist, die kleiner als 1,5 mm ist.

13. Vorrichtung nach Anspruch 12,
**dadurch gekennzeichnet,**
**dass** die Sonderkontaktzone (31, 50, 51, 52) eine Breite in der dritten Achsenrichtung aufweist, die kleiner als 1 mm ist.

## Claims

1. A device for welding rod-shaped electrical conductors (28, 29), the device comprising a compression space (18) for receiving two connection regions (26, 27) of the conductors (28, 29) to be connected, the connection regions (26, 27) extending in a first axial direction (x-axis), the compression space (18) being defined by a working surface (19) of a sonotrode (16), which transmits ultrasonic vibrations, and a counterface (20) of an anvil (21) at two opposite sides in a second axial direction (z-axis) and by a boundary surface (22) of a slider element (23), which is displaceable in a third axial direction (y-axis), and a boundary surface (24) of a boundary element (25) on two opposite sides in the third axial direction (y-axis), the working surface (19) of the sonotrode having a surface configuration, which differs from a contact zone (30) formed by the remaining working surface (19), in a special contact zone (31, 50, 51, 52), which is a section of the working surface (19) of the sonotrode (16) and serves to subject at least one connection region (26, 27) to ultrasonic vibrations, the contact zone (30) having a surface configuration comprising profile elevations (34) which extend in the third axial direction (y-axis) and at least some of which have a special profile cross-section (36) in the area of the special contact zone (31, 50, 51, 52) which differs from the profile cross-section (37) in the contact zone (30) in that the special profile cross-section (36) has a reduced profile height h compared to the profile cross-section (37),
**characterized in that**
the special contact zone is disposed adjacent to the boundary element in such a manner that the special contact zone is formed on a working surface edge (35) of the sonotrode (16) parallel to the boundary element.

2. The device according to claim 1,
**characterized in that**
the reduced profile height h is formed by a flattened portion (38) or a rounded portion of a profile peak (39) of the profile cross-section (37).

3. The device according to claim 1 or 2,
**characterized in that**
at least in a middle portion extending in the first axial direction (x-axis), the special contact zone (50, 51) has a special contact portion (53, 54, 55) which is symmetric with respect to an axis of symmetry S running parallel to the third axial direction (y-axis).

4. The device according to claim 3,
**characterized in that**
the special contact zone (50, 51) is symmetric across its entire length.

5. The device according to claim 3 or 4,
**characterized in that**
the axis of symmetry S is formed by a centerline M of the working surface, said centerline M running parallel to the third axial direction (y-axis).

6. The device according to any one of claims 3 to 5,
**characterized in that**
the special contact zone (51) is discontinuous.

7. The device according to claim 6,
**characterized in that**
at least one profile elevation (34) formed in the area of the axis of symmetry S extends across the entire width B of the working surface (19).

8. The device according to any one of the preceding claims,
**characterized in that**
the special contact zone (31, 50, 51, 52) extends across only part of the length of the contact zone (30) in the first axial direction (x-axis).

9. The device according to claim 8,
**characterized in that**
the special contact zone (52) is asymmetrical with respect to a centerline M of the working surface (19), said centerline M running parallel to the third axial direction (y-axis).

10. The device according to claim 9,
**characterized in that**
the special contact zone (52) is disposed toward a working surface end (56).

11. The device according to any one of the preceding claims,
**characterized in that**
the special contact zone (31, 50, 51, 52) has a width of less than 2 mm in the third axial direction (y-axis).

12. The device according to claim 11,
**characterized in that**
the special contact zone (31, 50, 51, 52) has a width of less than 1.5 mm in the third axial direction (y-axis).

13. The device according to claim 12,
**characterized in that**
the special contact zone (31, 50, 51, 52) has a width of less than 1 mm in the third axial direction.

## Revendications

1. Dispositif pour le soudage de conducteurs électriques (28, 29) en forme de bâton, le dispositif comprenant un espace de compression (18) pour la réception de deux régions de connexion (26, 27) à relier des conducteurs (28, 29), les régions de connexion (26, 27) s'étendant dans une première direction axiale (axe des abscisses), l'espace de compression (18) étant défini par une surface de travail (19) d'une sonotrode (16), qui transmet des vibrations ultrasonores, et une contre-face (20) d'une enclume (21) de deux côtés opposés dans une deuxième direction axiale (axe des cotes) et par une surface de limitation (22) d'un élément de coulisseau (23), qui est déplaçable dans une troisième direction axiale (axe des ordonnées), et une surface de limitation (24) d'un élément de limitation (25) de deux côtés opposés dans la troisième direction axiale (axe des ordonnées), la surface de travail (19) de la sonotrode (16) ayant une configuration de surface, qui diffère d'une zone de contact (30) formée par la surface de travail (19) restante, dans une zone de contact spéciale (31, 50, 51, 52), qui est une section de la surface de travail (19) et sert à soumettre au moins une région de connexion (26, 27) à des vibrations ultrasonores, la zone de contact (30) ayant une configuration de surface comprenant des éminences de profile (34) qui s'étendent dans la troisième direction axiale (axe des ordonnées) et au moins des parties desquelles ont une section transversale de profile spéciale (36) dans la région de la zone de contact spéciale (31, 50, 51, 52) qui diffère de la section transversale de profile (37) dans la zone de contact spéciale (30) en ce que la section transversale de profile spéciale (36) a une hauteur de profile h réduite en comparaison avec la section transversale de profile (37),
**caractérisé en ce que**
la zone de contact spéciale est disposée adjacente à l'élément de limitation de telle manière que la zone de contact spéciale est formée sur un bord de surface de travail (35) de la sonotrode (16) parallèle à l'élément de limitation.

2. Dispositif selon la revendication 1,
**caractérisé en ce que**
la hauteur de profile h réduite est formée par une partie aplatie (38) ou une partie arrondie d'une pointe de profile (39) de la section transversale de profile (37).

3. Dispositif selon la revendication 1 ou 2,
**caractérisé en ce**
**qu'**au moins dans une partie centrale s'étendant dans la première direction axiale (axe des abscisses), la zone de contact spéciale (50, 51) a une partie de contact spéciale (53, 54, 55) qui est symétrique par rapport à un axe de symétrie S s'étendant parallèlement à la troisième direction axiale (axe des ordonnées).

4. Dispositif selon la revendication 3,
**caractérisé en ce que**
la zone de contact spéciale (50, 51) est symétrique sur toute sa longueur.

5. Dispositif selon la revendication 3 ou 4,
**caractérisé en ce que**
l'axe de symétrie S est formé par un axe central M de la surface de travail, l'axe central M s'étendant parallèlement par rapport à la troisième direction axiale (axe des ordonnées).

6. Dispositif selon l'une quelconque des revendications 3 à 5,
**caractérisé en ce que**
la zone de contact spéciale (51) est discontinue.

7. Dispositif selon la revendication 6,
**caractérisé en ce**
**qu'**au moins une éminence de profile (34) formée dans la région de l'axe de symétrie S s'étend sur toute la largeur B de la surface de travail (19).

8. Dispositif selon l'une quelconque des revendications précédentes,
**caractérisé en ce que**
la zone de contact spéciale (31, 50, 51, 52) s'étend seulement sur une partie de la longueur de la zone de contact (30) dans la première direction axiale (axe des abscisses).

9. Dispositif selon la revendication 8,
**caractérisé en ce que**
la zone de contact spéciale (52) est asymétrique par rapport à un axe central M de la surface de travail (19), l'axe central M s'étendant parallèlement par rapport à la troisième direction axiale (axe des ordonnées).

10. Dispositif selon la revendication 9,
**caractérisé en ce que**
la zone de contact spéciale (52) est disposée vers une extrémité de surface de travail (56).

11. Dispositif selon l'une quelconque des revendications précédentes,
**caractérisé en ce que**
la zone de contact spéciale (31, 50, 51, 52) a une largeur inférieure à 2 mm dans la troisième direction axiale (axe des ordonnées).

12. Dispositif selon la revendication 11,
**caractérisé en ce que**
la zone de contact spéciale (31, 50, 51, 52) a une largeur inférieure à 1,5 mm dans la troisième direction axiale (axe des ordonnées).

13. Dispositif selon la revendication 12,
**caractérisé en ce que**
la zone de contact spéciale (31, 50, 51, 52) a une largeur inférieure à 1 mm dans la troisième direction axiale.
